# EUROPÄISCHE PATENTSCHRIFT

(11) **EP 0 917 034 B1**
(45) Veröffentlichungstag und Bekanntmachung des Hinweises auf die Patenterteilung: **06.03.2002**
(21) Anmeldenummer: 98119594.4
(22) Anmeldetag: 16.10.1998
(51) Int. Cl.: G05B 19/418, B29C 45/76

(54) **Verfahren zur Fernüberwachung und/oder Fernwartung einer Spritzgiessmaschine**
Method for remote monitoring and/or remote servicing of an injection moulding machine
Procédé de surveillance et/ou d'entretien à distance pour machine de moulage à injection

(30) Priorität: 14.11.1997 EP 97119967
(43) Veröffentlichungstag der Anmeldung: 19.05.1999
(73) Patentinhaber: ENGEL MASCHINENBAU GESELLSCHAFT MBH, A-4311 Schwertberg (AT)
(72) Erfinder: Kastner, Engelbert, 4320 Perg (AT)
(74) Vertreter: Torggler, Paul Norbert, Dr.

(56) Entgegenhaltungen:
- US-A- 4 826 418
- LUMPP T ET AL: "Virtual Java devices. Integration of fieldbus based systems in the Internet" IECON '98. PROCEEDINGS OF THE 24TH ANNUAL CONFERENCE OF THE IEEE INDUSTRIAL ELECTRONICS SOCIETY (CAT. NO.98CH36200), IECON '98. PROCEEDINGS OF THE 24TH ANNUAL CONFERENCE OF THE IEEE INDUSTRIAL ELECTRONICS SOCIETY, AACHEN, GERMANY, 31 AUG.-4 SEPT. 199, Seiten 176-181 vol.1, XP002095538 ISBN 0-7803-4503-7, 1998, New York, NY, USA, IEEE, USA

## Beschreibung

Die Erfindung betrifft ein Verfahren zur Femüberwachung und/oder Fernwartung einer Spritzgießmaschine, welche eine SPS mit mindestens einer CPU zur Ansteuerung der Aktuatoren der Spritzgießmaschine in Echtzeit aufweist, wobei Daten zwischen der Spritzgießmaschine und einem an einem entfernten Ort gelegenen Fernüberwachungs- bzw. Fernwartungsarbeitsplatz übertragen werden und diese Daten Prozeßdaten des von der Spritzgießmaschine ausgeführten Spritzgießprozesses und/oder Steuerparameter für die Prozeßsteuerung der Spritzgießmaschine umfassen.

Die Übertragung von Daten zu einem Arbeitsplatz, der an einem von der Spritzgießmaschine entfernten Ort vorgesehen ist, um von diesem Arbeitsplatz aus eine Fernwartung oder Femüberwachung der Spritzgießmaschine durchzuführen, ist bereits bekannt. Zu diesem Zweck wird üblicherweise eine serielle Punkt-zu-Punkt Datenverbindung zwischen der Spritzgießmaschine und dem entfernt gelegenen Arbeitsplatz aufgebaut, wobei Modems und das Telefonnetz als Datenleitung verwendet werden kann. Nachteilig bei diesem System ist es, daß an dem entfernt gelegenen Arbeitsplatz vorab eine speziell an die jeweilige Spritzgießmaschine angepaßte Software installiert werden muß, welche die Kommunikation mit der Spritzgießmaschine herstellt und deren Überwachung bzw. Steuerung ermöglicht.

Aus der US 4,826,418 ist eine Spritzgießmaschine gemäß dem Oberbegriff von Anspruch 1 bekannt.

Aus der WO 97/26587 ist es bekannt, einen Fertigungsstandort über das Internet mit externen Geräten, beispielsweise einem Programmiergerät zu verbinden. Der Fertigungsstandort weist u.a. mehrere SPS (Speicherprogrammierbare Steuerungen bzw. PLC) und Server auf, wobei ein Steuerprogramm vom externen Programmiergerät über das Internet in eine SPS des Fertigungsstandortes übertragen werden kann.

Aufgabe der Erfindung ist es, ein Verfahren der eingangs genannten Art bereitzustellen, mit dem die Möglichkeiten zur Femüberwachung und/oder Femwartung einer Spritzgießmaschine erweitert werden und durch das der Serviceaufwand und die Kosten für ein derartiges System verringert werden.

Erfindungsgemäß gelingt dies bei einem Verfahren der eingangs genannten Art dadurch, daß die SPS der Spritzgießmaschine zusätzlich zur Echtzeit-Ansteuerung der Aktuatoren der Spritzgießmaschine als Web-Server, vorzugsweise HTTP-Server oder FTP-Server arbeitet, über den eine gleichzeitige Kommunikationsverbindung mit zwei oder mehreren Fernüberwachungs- bzw. Fernwartungsarbeitsplätzen herstellbar ist, wobei eine CPU der SPS sowohl Echtzeit-Ansteuerungen der Spritzgießmaschine als auch Server-Funktionen für die Fernüberwachung bzw. Fernwartung ausführt.

Die Spritzgießmaschine benötigt somit keinen zusätzlich zur SPS vorgesehenen separaten Server zur Kommunikation mit den Femüberwachungs- bzw. Fernwartungsarbeitsplätzen, sondern diese Funktionalität wird direkt von der SPS übernommen. Auf der SPS laufen daher zwei völlig unterschiedliche Funktionalitäten ab, die von ihrem Charakter her bisher als widersprüchlich angesehen wurden, und zwar sind dies die Ansteuerung der Spritzgießmaschine; welche echtzeitfähig sein muß, und die rechenzeit- und speicherintensiven Kommunikationsaufgaben eines Web-Servers.

Ein weiterer Vorteil des erfindungsgemäßen Verfahrens besteht darin, daß die Fernüberwachungs- bzw. Fernwartungsarbeitsplätze nicht speziell vorbereitet sein müssen. Die entsprechende Kommunikationssoftware kann in der SPS der Spritzgießmaschine selbst gespeichert sein und kann vom Fernüberwachungs- bzw. Femwartungsarbeitsplatz aus über ein Standardkommunikationsprotokoll wie HTTP oder FTP von der SPS abgerufen werden. Die Datenverbindung kann dabei beispielsweise über das Internet erfolgen.

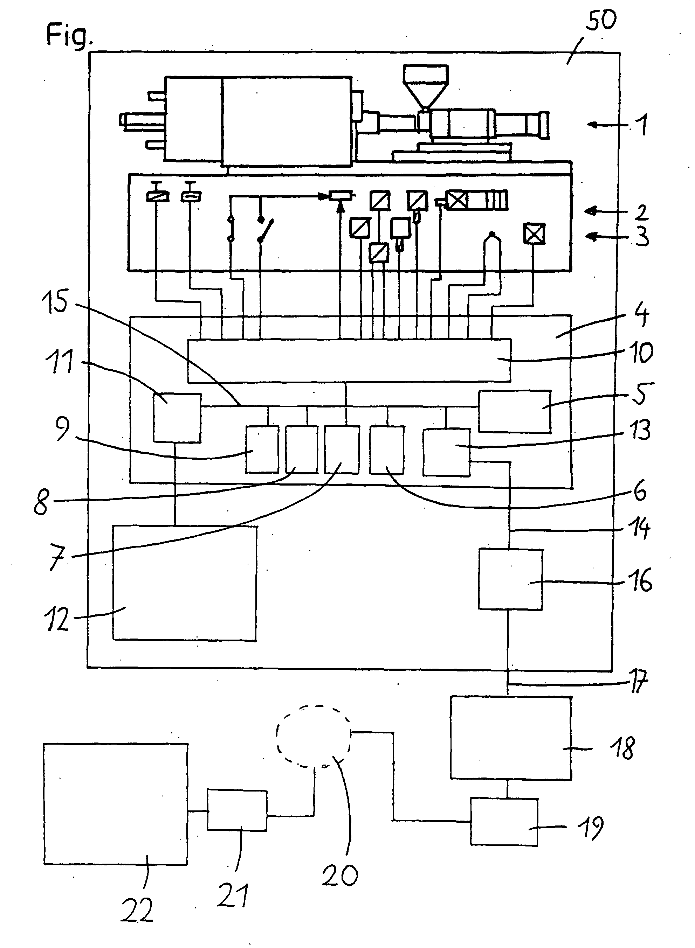

Weitere Vorteile und Einzelheiten werden im folgenden anhand der beiliegenden Zeichnung erläutert.

In dieser zeigt die einzige Figur eine schematische Darstellung einer Spritzgießmaschine, mit der das erfindungsgemäße Verfahren ausgeführt werden kann und die mit einem Femüberwachungs- bzw. Femwartungsarbeitsplatz in Verbindung steht.

Die in der Figur schematisch dargestellte Spritzgießmaschine 50 umfaßt die Maschinenelemente 1, welche den eigentlichen Spritzgießprozeß ausführen sowie Aktuatoren und Sensoren 2, 3 wobei über die Aktuatoren 2 die Maschinenelemente 1 angesteuert werden können und über die Sensoren 3 die Istwerte der Prozeßparameter erfaßt werden. Beispielsweise kann über einen Triak ein Heizkreislauf geschlossen werden und über einen Temperaturfühler die Temperatur des Granulats in der Schnecke erfaßt werden. Diese Teile 1, 2, 3 der Spritzgießmaschine entsprechen dem Stand der Technik und werden hier nicht näher erläutert.

Zur Ansteuerung der Aktuatoren 2 der Spritzgießmaschine ist eine SPS 4 vorgesehen, welche einen einzelnen Mikroprozessor bzw. CPU 5 aufweist. Zur Steuerung und Regelung der Aktuatoren 2 und zur Erfassung der Istwerte der Sensoren 3 sind Ein- und Ausgänge 10 vorgesehen, welche beispielsweise eine Digitalausgangskarte, eine Digitaleingangskarte, eine analoge Eingangs/Ausgangskarte und einen Temperaturregler umfassen. Die CPU 5, die Ein/Ausgänge 10 und die im folgenden beschriebenen weiteren Bausteine 6 bis 11 der SPS 4 kommunizieren über einen lokalen Synchronbus 15 oder Feldbus (vorzugsweise CAN-Bus). Der Speicher 6 enthält SPS-Programme, der Speicher 7 Prozeßdaten, der Speicher 8 Bedien- und Anzeigeprogramme und der Speicher 9 Kommunikationsdateien zur Kommunikation eines Femüberwachungs- bzw. Femwartungsarbeitsplatzes mit der Spritzgießmaschine. Die Speicher 6 bis 9 können als ein oder mehrere physikalische Speicherbausteine ausgebildet sein, welche statische und dynamische RAM-Speicher, Flash-Speicher und ROM-Speicher umfassen können. Beim Starten der Spritzgießmaschine können Daten von einem Permanentspeicher (nicht dargestellt) in einen oder mehrere der Speicher 6, 7, 8, 9 geladen werden.

Die Verbindung der SPS mit einem Bedien- und Anzeigegerät 12, das einen Bildschirm und eine Eingabetastatur umfaßt, erfolgt über eine Schnittstelle 11 der SPS. Zur Eingabe und Anzeige von Daten am Bedien- und Anzeigegerät sind die im Speicher 8 gespeicherten und von der CPU 5 abgearbeiteten Bedien- und Anzeigeprogramme vorgesehen.

Weiters weist die SPS eine Schnittstelle 13 mit einem seriellen Ausgang auf. An diesen ist über eine serielle Datenleitung 14 ein Konvertierungsrechner 16 angeschlossen, der das serielle Datenformat in ein netzwerkfähiges Datenformat, vorzugsweise TCP/IP umwandelt. Auf diese Weise kann die Spritzgießmaschine 50 über ein LAN (lokales Netzwerk) 17 an einen Gateway-Rechner 18 angeschlossen werden. In einer weiteren Variante kann der Gateway-Rechner 18 entfallen und die SPS bedient über die Schnittstelle 13 direkt das Modem 19 (vorzugsweise unter Zwischenschaltung eines Konvertierungsrechners).

Die im Gateway-Rechner ablaufende Software bedient ein Modem 19, welches über das Telefonnetz oder das Internet 20 mit einem an einem entfernten Ort gelegenen Modem 21 verbunden ist. Das Modem 21 wiederum ist an einen Fernüberwachungs- oder Fernwartungsrechner 22 angeschlossen. Weitere solche Arbeitsplätze 21, 22 können an verschiedenen Orten vorgesehen sein.

Erfindungsgemäß arbeitet nun die SPS 4 zusätzlich zur Echtzeitansteuerung der Aktuatoren 2 der Spritzgießmaschine als Web-Server, wobei besonders die Verwendung des HTTP- oder FTP-Standards bevorzugt ist. Es muß daher der Rechner 22 nicht mit einer an die spezielle Spritzgießmaschine 50 angepaßten Software vorbereitet sein, sondern nur über ein Standardprogramm, wie einen HTTP- oder FTP-Browser, zur Kommunikation mit einem derartigen Web-Server aufweisen. Die speziellen für die Fernüberwachung oder Fernwartung der Spritzgießmaschine 50 einzusetzenden Kommunikationsdateien, vorzugsweise in der Form von Java-Applets oder HTML-Dateien, sind im Speicher 9 der SPS 4 selbst gespeichert und können vom Rechner 22 aus in diesen heruntergeladen werden. Auch mehrere solcher Rechner 22 können gleichzeitig eine Kommunikationsverbindung mit der SPS aufnehmen. Die CPU 5 der SPS führt dabei im gleichen Zeitraum sowohl Echtzeitansteuerungen der Spritzgießmaschine als auch Serverfunktionen aus.

Wenn der Rechner 22 als Femüberwachungsrechner eingesetzt wird, so werden an dessen Bildschirm Prozeßdaten des von der Spritzgießmaschine ausgeführten Spritzgießprozesses und/oder Steuerparameter für die Prozeßsteuerung der Spritzgießmaschine angezeigt. Wird der Rechner 22 auch als Femwartungsrechner eingesetzt, so können vom Rechner 22 aus darüberhinaus im Speicher 7 der SPS 4 gespeicherte Steuerparameter des Spritzgießprozesses und/oder im Speicher 8 der SPS 4 gespeicherte Bedien- und Anzeigeprogramme und/oder im Speicher 6 der SPS 4 gespeicherte SPS-Programme und/oder im Speicher 9 der SPS 4 gespeicherte Kommunikationsdateien verändert bzw. in den jeweiligen Speicher übertragen werden.

Prinzipiell wäre es auch denkbar und möglich, daß die SPS anstelle einer einzelnen CPU mehrere parallele CPU's oder eine zentrale CPU und eine oder mehrere dieser zugeordnete Hilfs-CPU's aufweist. In diesen Fällen würde jede der parallelen CPU's bzw. die zentrale CPU quasi gleichzeitig die Echtzeitansteuerungen als auch die Serverfunktionen ausführen.

## Patentansprüche

1. Verfahren zur Fernüberwachung und/oder Fernwartung einer Spritzgießmaschine (50), welche eine SPS (4) mit mindestens einer CPU (5) zur Ansteuerung der Aktuatoren (2) der Spritzgießmaschine in Echtzeit aufweist, wobei Daten zwischen der Spritzgießmaschine und einem an einem entfernten Ort gelegenen Femüberwachungs- bzw. Fernwartungsarbeitsplatz (21, 22) übertragen werden und diese Daten Prozeßdaten des von der Spritzgießmaschine ausgeführten Spritzgießprozesses und/oder Steuerparameter für die Prozeßsteuerung der Spritzgießmaschine umfassen, **dadurch gekennzeichnet, daß** die SPS (4) der Spritzgießmaschine (50) zusätzlich zur Echtzeit-Ansteuerung der Aktuatoren (2) der Spritzgießmaschine als Web-Server, vorzugsweise HTTP-Server oder FTP-Server arbeitet, über den eine gleichzeitige Kommunikationsverbindung mit zwei oder mehreren Fernüberwachungs- bzw. Fernwartungsarbeitsplätzen (21, 22) herstellbar ist, wobei eine CPU (5) der SPS (4) sowohl Echtzeit-Ansteuerungen der Spritzgießmaschine als auch Server-Funktionen für die Fernüberwachung bzw. Fernwartung ausführt.

2. Verfahren nach Anspruch 1, **dadurch gekennzeichnet, daß** die SPS (4) nur eine CPU (5) aufweist.

3. Verfahren nach Anspruch 1 oder 2, **dadurch gekennzeichnet, daß** die Kommunikation mit dem Femwartungs- bzw. Fernüberwachungsarbeitsplatz (21, 22) über das Internet (20) erfolgt.

4. Verfahren nach einem der Ansprüche 1 bis 3, **dadurch gekennzeichnet, daß** die Datenübertragung mittels eines Modems (19) und einem das Modem bedienenden Gateway-Rechner (18) erfolgt, welcher mit der SPS (4) verbunden ist.

5. Verfahren nach Anspruch 4, **dadurch gekennzeichnet, daß** die Daten von der SPS (4) über eine serielle Datenleitung (14) ausgegeben bzw. empfangen werden und daß ein Konvertierungsrechner (16) diese serielle Datenleitung an ein lokales Netzwerk (17) anbindet, an das der Gateway-Rechner (18) angeschlossen ist.

6. Verfahren nach einem der Ansprüche 1 bis 3, **dadurch gekennzeichnet, daß** die Datenübertragung mittels eines Modems (19) erfolgt, welches von der Schnittstelle (13) der SPS bedient wird.

7. Verfahren nach einem der Ansprüche 1 bis 6, **dadurch gekennzeichnet, daß** in der SPS (4) Kommunikationsdaten, vorzugsweise Java-Applets und/oder HTML-Daten gespeichert sind, die von der SPS bei Abruf an den Fernwartungs- bzw. Fernüberwachungsarbeitsplatz (21, 22) übertragen werden.

## Claims

1. A method of remote monitoring and/or remote maintenance of an injection moulding machine (50) which has an SPC (4) with at least one CPU (5) for operation of actuators (2) of the injection moulding machine in real-time, wherein data are transmitted between the injection moulding machine and a remote monitoring or remote maintenance workstation (21, 22) disposed at a remote location, said data including process data of an injection moulding process effected by the injection moulding machine and/or control parameters for process control of the injection moulding machine, **characterised in that** the SPC (4) of the injection moulding machine (50), in addition to real-time operation of the actuators (2) of the injection moulding machine, operates as a web server, preferably as a HTTP-Server or a FTP-Server, by way of which it is possible to make a simultaneous communication connection with two or more remote monitoring or remote maintenance workstations (21, 22), a CPU (5) of the SPC (4) performing both real-time control operations of the injection moulding machine and also server functions for remote monitoring or remote maintenance.

2. A method according to claim 1, **characterised in that** the SPC (4) has only one CPU (5).

3. A method according to claim 1 or 2, **characterised in that** the communication with the remote maintenance or remote monitoring workstation (21, 22) is established by way of the Internet (20).

4. A method according to one of claims 1 to 3, **characterised in that** the data is transmitted by way of a modem (19) and a gateway computer (18) which operates the modem and which is connected to the SPC (4).

5. A method according to claim 4, **characterised in that** the data are outputted or received by the SPC (4) by way of a serial data line (14) and that a converting computer (16) connects said serial data line to a local network (17) to which the gateway computer (18) is connected.

6. A method according to one of claims 1 to 3, **characterised in that** the data is transmitted by way of a modem (19) which is operated by an interface (13) of the SPC.

7. A method according to one of claims 1 to 6, **characterised in that** communication data files, preferably Java-Applets and/or HTML-data files, are stored in the SPC (4) which are transmitted from the SPC upon being called up to the remote maintenance or remote monitoring workstation (21, 22).

## Revendications

1. Procédé de surveillance et/ou d'entretien à distance pour une machine de moulage à injection (50) qui présente un API (4) avec au moins une unité centrale (CPU) (5) pour commander en temps réel les actionneurs (2) de la machine de moulage à injection, des données étant transmises entre la machine de moulage à injection et un poste de surveillance et/ou d'entretien à distance (21, 22) situé en un lieu distant et ces données comprenant des données de traitement pour le processus de moulage à injection exécuté par la machine de moulage à injection et/ou les paramètres de commande pour la commande du traitement de la machine de moulage à injection, **caractérisé en ce que** l'API (4) de la machine de moulage à injection (50), outre la commande en temps réel des actionneurs (2) de la machine de moulage à injection, travaille en tant que serveur Web, de préférence comme serveur HTTP ou serveur FTP, par le biais duquel il est possible de réaliser une liaison de communication simultanée avec deux ou plusieurs postes de surveillance et/ou d'entretien à distance (21,22), une unité centrale (5) de l'API (4) exécutant aussi bien des commandes en temps réel de la machine de moulage à injection que des fonctions de serveur pour la surveillance ou l'entretien à distance.

2. Procédé selon la revendicaton 1, **caractérisé en ce que** l'API (4) ne présente qu'une unité central (5).

3. Procédé selon la revendicaton 1 ou 2, **caractérisé en ce que** la communication avec le poste de surveillance et/ou d'entretien à distance (21, 22) se fait par le biais de l'Internet (20).

4. Procédé selon l'une quelconque des revendicatons 1 à 3, **caractérisé en ce que** la transmission de données se fait à l'aide d'un modem (19) et d'un ordinateur passerelle (18) qui commande le modem et qui est connecté à l'API (4).

5. Procédé selon la revendicaton 4, **caractérisé en ce que** les données de l'API (4) sont émises ou reçues par le biais d'une interface série (14) et qu'un ordinateur de conversion (16) relie cette ligne de données série à un réseau local (17) auquel est connecté l'ordinateur passerelle (18).

6. Procédé selon l'une quelconque des revendicatons 1 à 3, **caractérisé en ce que** la transmission de données se fait à l'aide d'un modem (19) qui est commandé par l'interface (13) de l'API.

7. Procédé selon l'une quelconque des revendicatons 1 à 6, **caractérisé en ce que** les données de communication enregistrées dans l'API (4) sont de préférence des applets Java et/ou des données HTML qui sont transmises de l'API en cas de demande au poste de surveillance ou d'entretien à distance (21, 22).
